# FASCICULE DE BREVET EUROPEEN

(11) **EP 3 646 437 B1**
(45) Date de publication et mention de la délivrance du brevet: **06.12.2023**
(21) Numéro de dépôt: 18740621.0
(22) Date de dépôt: 23.07.2018
(51) Int. Cl.: H02K 1/2791, H02K 15/03

(54) **ROTOR A AIMANTS PERMANENTS POUR MOTEUR ELECTRIQUE ET DISPOSITIF DE PULSION D'AIR CORRESPONDANT**
DAUERMAGNETLÄUFER EINES ELEKTROMOTORS UND ENTSPRECHENDES ZULUFTGERÄT
PERMANENT MAGNET ROTOR FOR ELECTRIC MOTOR AND CORRESPONDING AIR SUPPLY DEVICE

(30) Priorité: 24.07.2017 FR 1756988
(43) Date de publication de la demande: 06.05.2020
(73) Titulaire: Valeo Equipements Electriques Moteur, 94046 Créteil Cedex (FR)
(72) Inventeur: QUITSCH, Cordula, 94046 Creteil Cedex (FR); PAGNARD, Maxime, 94046 Creteil Cedex (FR); BOUGRASSA, Aziz, 94046 Creteil Cedex (FR); BOUGRASSA, Omar, 94046 Creteil Cedex (FR); LABASTE-MAUHE, Laurent, 94046 Creteil Cedex (FR); LORET, Benjamin, 94046 Creteil Cedex (FR); BRISSET, Anthony, 78322 Le Mesnil Saint Denis Cedex (FR)
(74) Mandataire: Valeo Systèmes Thermiques
(86) Numéro de dépôt international: PCT/EP2018/069951
(87) Numéro de publication internationale: WO 2019/020581

(56) Documents cités:
- GB-A- 2 191 638
- US-A- 5 861 695
- US-A1- 2010 033 036
- US-A1- 2014 197 708
- US-A1- 2016 190 881
- US-B1- 7 579 742

## Description

L'invention se rapporte au domaine des moteurs électriques à commutation électronique, et aux dispositifs de pulsion d'air dans des véhicules automobiles comportant de tels moteurs électriques.

Un dispositif de pulsion d'air équipé d'un moteur électrique selon l'invention est, par exemple, utilisé dans un système de ventilation, de chauffage et/ou de climatisation d'un véhicule automobile. Les moteurs électriques équipant ce type de dispositifs comportent un ensemble rotor et stator, chacun de ces composants étant porteur d'éléments électromagnétiques dont l'interaction génère le déplacement du rotor relativement au stator et la mise en rotation d'un arbre d'entraînement porté par le rotor. A l'extrémité libre de l'arbre est agencée une roue de ventilation dont le mouvement génère l'aspiration ou le souffle d'air.

Le rotor est disposé autour du stator et il porte sur sa face interne des aimants permanents interagissant avec les bobines alimentées en courant portées par le stator. La commutation de courant dans les bobines du stator génère un champ magnétique tournant en regard duquel les aimants permanents fixés sur le rotor visent à se positionner.

Il est connu de fixer les aimants permanents sur la face interne de la paroi annulaire par l'intermédiaire d'une couche de colle. La couche de colle est appliquée de façon continue sur tout le pourtour de la paroi annulaire, afin de permettre une étape rapide de dépôt de colle et de s'assurer que chaque aimant permanent positionné contre la paroi annulaire est maintenu par une quantité de colle suffisante. A titre d'exemple non limitatif, on peut prévoir de déposer deux traits de colle continus sur tout le pourtour de la paroi annulaire disposés à distance axiale l'un de l'autre de sorte que chaque aimant permanent soit en prise avec chacun des traits de colle. L'application de la colle sur tout le pourtour de la paroi annulaire permet également de positionner librement les aimants permanents le long de ladite paroi, sans se soucier de la position de la couche de colle. Les aimants permanents sont ainsi montés sur la paroi annulaire sans contraintes concernant un alignement particulier entre chaque aimant permanent et la bande de colle. Cela permet un montage rapide des aimants permanents sur la paroi annulaire du rotor.

Les documents US2016/190881A1, GB2191638A, US7579742B1 et US2010/033036A1 divulguent des rotors à aimants permanents, les aimants ayant une section perpendiculaire à l'axe en forme rectangulaire. Dans US7579742B1, seuls les coins droits des aimants sont en contact direct avec la cloche magnétique du rotor.

Néanmoins, cette solution présente l'inconvénient d'interposer une épaisseur de colle continue entre chaque aimant permanent et la paroi annulaire du rotor. La présence de la couche de colle nuit alors à la propagation dans le rotor du champ magnétique généré par l'interaction de chaque aimant avec les bobines alimentées. En d'autres termes, en fonction de son épaisseur et de ses propriétés, la couche de colle isole magnétiquement chaque aimant permanent du rotor. Cela se traduit par l'établissement d'un couple électromagnétique de moins bonne qualité entre le stator et les aimants permanents maintenus contre la cloche et par un fonctionnement moins efficace du moteur électrique.

Dans ce contexte, l'invention vise à proposer une alternative aux rotors externes, équipés d'aimants permanents, existants.

L'invention propose un rotor à aimants permanents pour moteur électrique selon la revendication 1. Le rotor comprend une cloche comportant une paroi annulaire et au moins un aimant permanent fixé sur la paroi annulaire par l'intermédiaire de moyens adhésifs disposés entre la paroi annulaire et une face arrière de l'aimant permanent.

La face arrière de l'aimant permanent présente une zone de fixation définie par un rayon de courbure qui est supérieur au rayon de courbure de la paroi annulaire, ladite zone de fixation participant ainsi à former une cavité de réception desdits moyens adhésifs.

En d'autres termes, de façon avantageuse, on forme un méplat sur la face arrière qui permet le logement des moyens adhésifs sur une portion définie de l'aimant permanent. L'invention propose ainsi d'utiliser les moyens adhésifs de façon discontinue le long de la paroi annulaire de la cloche, pour permettre à une partie de la face arrière de l'aimant permanent comportant une face arrière avec un tel rayon de courbure d'être en contact direct avec la cloche de part et d'autre d'une zone de fixation dans laquelle sont confinés les moyens de maintien adhésifs. Là où il y a contact direct, il n'y a aucun moyen adhésif intermédiaire entre l'aimant et la cloche, pas même une très fine pellicule d'adhésif. Pour cela le moyen de maintien adhésif est appliqué de façon très localisée dans la zone de fixation. Le moyen adhésif peut être de la colle ou un autre adhésif. Les inventeurs ont ainsi constaté que l'on obtient un couple électromagnétique de bien meilleure qualité avec un stator positionné dans le logement formé par la cloche. Bien entendu, la cloche est de préférence formée à partir d'un matériau magnétique favorisant le passage d'un flux magnétique entre les aimants permanents et la cloche. À titre d'exemple, la cloche est formée à partir de matériaux ferromagnétiques ou paramagnétiques. Selon un autre avantage, une quantité de moyens adhésifs moins importante est utilisée pour maintenir les aimants sur la cloche, aucun moyen adhésif n'étant disposé sur la cloche entre deux aimants permanents voisins. L'invention permet aussi de réaliser des économies sur la quantité de moyens de adhésifs utilisés lors de la fabrication du rotor.

En d'autres termes, le rayon de courbure d'une surface délimitée par la zone de fixation est choisi de manière à former une cavité entre l'aimant permanent et une partie de la paroi annulaire interne de la cloche du rotor lorsque l'aimant permanent est rapporté sur la cloche du rotor, le volume de cette cavité étant choisi suffisamment grand pour permettre aux moyens adhésifs de fixer l'aimant permanent contre la paroi annulaire. Le volume de la cavité ainsi formée peut être modifié et notamment en fonction des moyens adhésifs employés et du poids de l'aimant permanent. A cet effet, on comprend que la zone de fixation pourra délimiter une surface dont le rayon de courbure est plus ou moins supérieur au rayon de courbure de la paroi annulaire de la cloche du rotor. Notamment, le rapport entre le rayon de courbure d'une surface délimitée par la zone de fixation et le rayon de courbure de la paroi annulaire interne peut être supérieur à 1,1, de préférence compris entre 1,1 et 4,2. Par exemple, ce rapport est de l'ordre de 1,4. Ce rapport permet d'obtenir une épaisseur radiale maximum de la cavité, notamment à un niveau central de cette dernière, comprise entre 0,08 mm et 0,23 mm. Par exemple cette épaisseur est de l'ordre de 0,15 mm. Cette plage d'épaisseur permet de garantir une bonne fixation de l'aimant.

Dans ce contexte, il peut être prévu que la face arrière de l'aimant permanent comprenne une zone de fixation formée d'une ou plusieurs concavités et donc présentant une ou plusieurs surfaces avec un rayon de courbure propre, chacun de ces rayons de courbure étant conforme à ce qui a été précisé précédemment, à savoir supérieur au rayon de courbure de la paroi annulaire de la cloche, de manière à accroître le volume de la cavité formée entre au moins un aimant permanent et la cloche.

De façon alternative ou concomitante, il peut être prévu que la paroi annulaire de la cloche comprenne, au moins dans la zone de coopération avec l'aimant permanent, une ou plusieurs concavités, de manière là encore à accroître le volume de la cavité formée entre au moins un aimant permanent et la cloche.

Selon une première série de caractéristiques, prises seules ou en combinaison, on pourra prévoir que :
- la zone de fixation formant réception desdits moyens adhésifs s'étend partiellement sur la dimension de la face arrière de l'au moins un aimant permanent définie d'un bord latéral à l'autre ;
- d'après l'invention, la face arrière est conformée de sorte que la zone de fixation est bordée latéralement par deux zones de contact avec la paroi annulaire, lesdits moyens adhésifs étant contenus dans la zone de fixation ; autrement dit, les zones de contact sont séparées par une unique zone de fixation ; selon une autre alternative, plusieurs zones de fixation délimitant des surfaces de courbure différentes peuvent être interposées entre les zones de contact ;
- chaque zone de contact est délimitée par une surface dont le rayon de courbure est inférieur au rayon de courbure de la surface délimitant la zone de fixation ;
- la surface délimitant la zone de fixation occupe entre 20% et 60%, de préférence entre 25% et 40% de la surface de la face arrière de l'au moins un aimant permanent. De la sorte, on assure une quantité de colle suffisante pour fixer correctement l'aimant permanent et la présence de passages, de part et d'autre de cette zone de fixation qui sont sans colle interposée entre l'aimant permanent et la cloche du rotor, suffisamment étendus pour permettre le passage du flux magnétique de l'aimant permanent à la cloche du rotor.

La zone de contact de l'aimant permanent est une zone de contact direct entre la paroi annulaire de la cloche et l'aimant sans interposition des moyens adhésifs.

Le rapport entre le rayon de courbure d'une surface délimitée par une zone de fixation et le rayon de courbure d'une surface délimitée par une zone de contact d'un même aimant permanent est égal ou supérieur à 1, de préférence compris entre 1 et 4,2. En d'autres termes, l'intégralité de la face arrière de l'aimant permanent peut avoir une seule et même courbure ou bien avoir au moins deux courbures différentes. Dans ce dernier cas, la zone de fixation est de préférence centrée au niveau de la face arrière afin de favoriser une surface de contact définie par les zones de contact avec la paroi annulaire qui soit également répartie de chaque côté de la zone de fixation. Selon un exemple de réalisation préféré, la zone de fixation forme un méplat lorsque les zones de contact délimitent des surfaces dont le rayon de courbure est identique à celui de la paroi annulaire.

Selon une autre série de caractéristiques de l'invention, on pourra prévoir que la zone de fixation formant réception desdits moyens adhésifs s'étend sur toute la dimension de la face arrière de l'au moins un aimant permanent définie d'un bord latéral à l'autre. Dans ce cas, l'au moins un aimant permanent peut être au contact de la paroi annulaire de la cloche du rotor par l'intermédiaire des bords latéraux de cet aimant, de part et d'autre de la zone de fixation.

Selon des caractéristiques de l'invention, la cloche du rotor délimité par la paroi annulaire s'étend le long d'un axe longitudinal et les zones de contact délimitent chacune une surface s'étendant le long de cet axe longitudinal. Autrement dit, de préférence les zones de contact s'étendent le long de la face arrière d'un aimant permanent de manière à favoriser un contact régulier sur toute la longueur de l'aimant permanent le long de la paroi annulaire du rotor.

Selon une caractéristique de l'invention, dans une disposition en série d'une pluralité d'aimants permanent sur le pourtour de la paroi annulaire de la cloche du rotor, au moins deux aimants permanents identiques et adjacents sont écartés d'une distance angulaire comprise entre 5° et 20°. L'homme du métier comprendra que cette distance angulaire dépend de la polarité de la machine et du nombre d'aimants permanents.

Selon une caractéristique de l'invention, le rotor comprend au moins un aimant permanent dont la face avant présente une courbe parallèle à celle de la paroi annulaire de la cloche, ou en d'autres termes dont la face avant s'inscrit dans un cylindre droit coaxial au cylindre droit dans lequel s'inscrit la paroi annulaire de la cloche du rotor.

Les moyens adhésifs peuvent consister en une colle, présente dans une cavité formée entre une partie de la paroi annulaire de la cloche et la zone de fixation définie par la forme de la face arrière d'au moins un aimant permanent. À titre d'exemple, la colle peut être une résine de type époxy ou à base d'acrylate mono-composant dont le durcissement se produit à l'exposition d'un rayonnement UV et/ou UVA.

Selon une alternative, les moyens adhésifs peuvent comprendre une bande adhésive double-face préalablement disposée contre la face arrière de l'aimant sans déborder sur les zones de contact de cet aimant.

Selon une caractéristique de l'invention, la zone de fixation pour la réception desdits moyens adhésifs peut s'étendre le long de la face arrière de l'au moins un aimant permanent de manière à déboucher au niveau d'une face transversale de cet aimant permanent. De la sorte, on forme au moins un accès à la colle pour faciliter le chauffage de celle-ci par un rayonnement UV approprié permettant de modifier la colle et d'assurer son adhésion sur la paroi annulaire de la cloche du rotor.

Le rotor selon l'invention peut notamment comporter une pluralité d'aimants permanents agencés en série sur le pourtour de la paroi annulaire, chaque aimant permanent comportant une zone de fixation formant une cavité de réception de moyens adhésifs pour sa fixation sur la paroi annulaire, cette paroi annulaire étant dépourvue de moyens adhésifs entre deux aimants permanents successifs. Et chaque aimant permanent peut comporter des zones de contact avec la paroi annulaire agencées latéralement, c'est-à-dire au plus près d'un aimant permanent voisin.

L'invention concerne également un dispositif de pulsion d'air pour véhicule automobile comprenant une roue de ventilation entraînée en rotation par un moteur électrique comportant un stator porteur d'un bobinage alimenté électriquement et un rotor externe, le rotor étant conforme à ce qui vient d'être décrit précédemment, notamment sur la forme de la face arrière d'au moins aimant permanent et la présence de moyens adhésifs dans des zones bien déterminées. Par dispositif de pulsion d'air, on comprend un dispositif permettant d'aspirer et/ou de souffler de l'air.

L'invention concerne aussi un véhicule automobile comprenant un dispositif de pulsion d'air décrit ci-dessus.

Bien entendu, les caractéristiques, les variantes et les différentes formes de réalisation de l'invention mentionnées ci-dessus peuvent être associées les unes avec les autres, selon diverses combinaisons, dans la mesure où elles ne sont pas incompatibles ou exclusives les unes des autres.

D'autres caractéristiques et avantages de la présente invention apparaitront plus clairement à l'aide de la description et des dessins ci-joints :

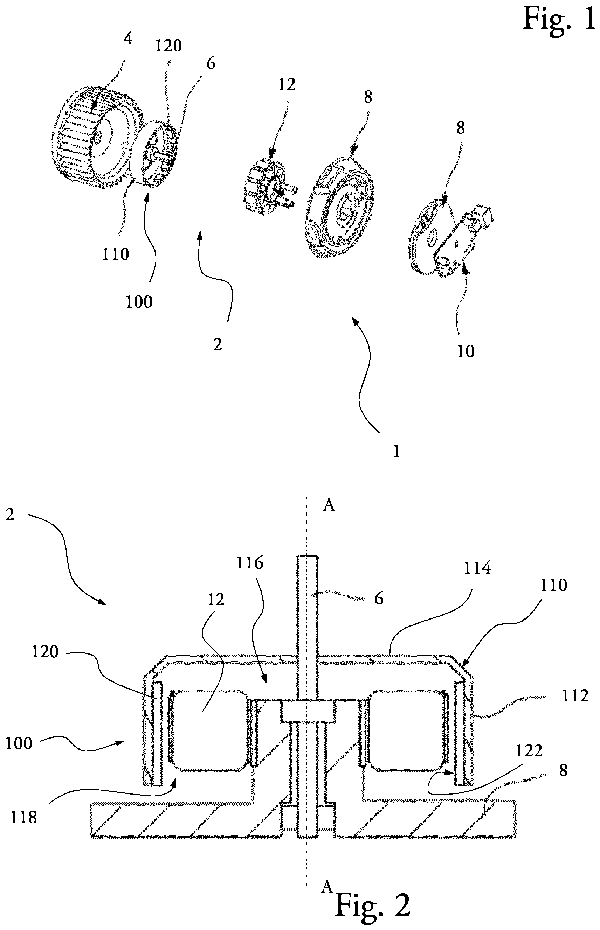

- la figure 1 est une représentation en perspective éclatée d'un dispositif de pulsion d'air équipé d'un ventilateur et d'un moteur d'entraînement comportant au moins un rotor externe équipé d'aimants permanents ;
- la figure 2 est une vue dans un plan de coupe axial du rotor et du stator du moteur électrique de la figure 1 ;
- la figure 3 est une vue en perspective d'un rotor selon l'invention, comprenant notamment une cloche et plusieurs aimants permanents fixés sur la paroi annulaire de cette cloche ;
- la figure 4 est une vue en perspective d'un aimant permanent illustré à la figure 3, ici d'un premier type, partiellement recouvert par une couche de colle ;
- la figure 5 est une représentation partielle du rotor de la figure 3, ciblée sur un aimant permanent tel qu'illustré sur la figure 4, et vue de dessus ;
- la figure 6 est une vue en perspective similaire à celle de la figure 4, illustrant un deuxième type d'aimant permanent utilisé par l'invention, recouvert en partie par une couche de colle ; et
- la figure 7 correspond à un exemple de réalisation non revendiqué et est une vue similaire à celle de la figure 5, illustrant la coopération d'un rotor et d'un troisième type d'aimant permanent.

Un dispositif de pulsion d'air 1, qui permet d'aspirer et/ou de souffler de l'air, comporte au moins un moteur électrique à commutation électronique 2, apte à entraîner en rotation une roue de ventilation 4, de type ici à ailettes, par l'intermédiaire d'un arbre de sortie 6 du moteur électrique. Le dispositif comporte en outre au moins un moyen de support 8 du moteur électrique 2, formant radiateur du moteur et sur lequel est fixée une carte électronique de commande 10 dudit moteur électrique 2.

Le moteur électrique 2 comporte principalement un stator 12 et un rotor 100, porteur de l'arbre de sortie 6 apte à entraîner la roue de ventilation 4. Le stator 12 est rendu solidaire du moyen de support 8, et le rotor 100 est agencé autour du stator 12 pour être entraîné en rotation sous l'effet des champs magnétiques générés par le bobinage et des aimants permanents 120 associés au rotor et qui vont être décrits plus en détails ci-après.

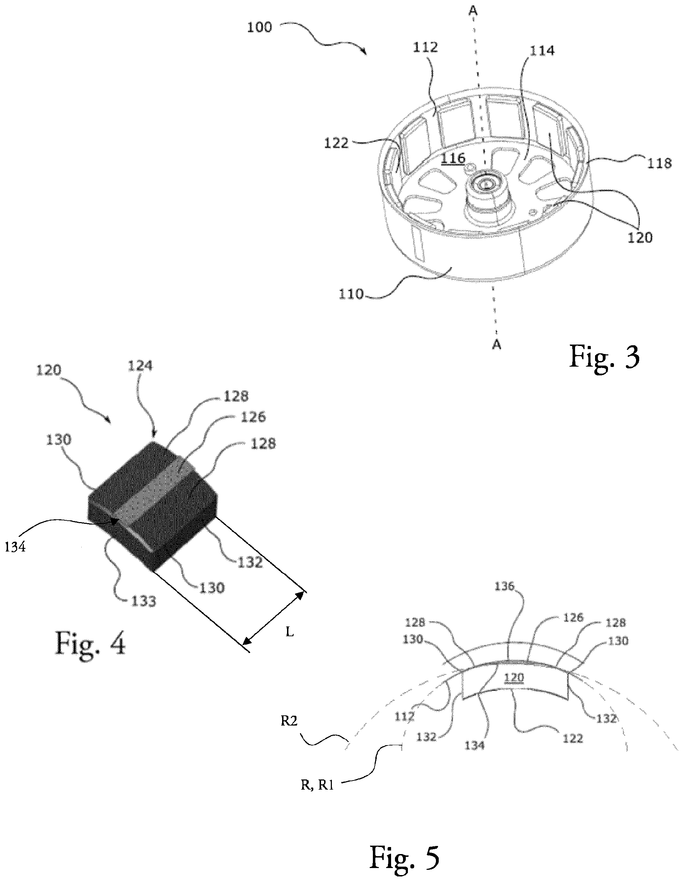

Comme illustré à la figure 3, le rotor 100 selon l'invention comprend une cloche 110 comportant une paroi annulaire 112 et une paroi transversale 114 délimitant un logement 116. Plus précisément, la cloche 110 est dimensionnée et ouverte au niveau d'une extrémité 118, à l'opposé de la paroi transversale, de manière à permettre le positionnement du stator 12 dans le logement 116.

La cloche 110 présente une forme de révolution autour d'un axe longitudinal (AA) autour duquel la paroi annulaire 112 s'étend de manière à former le logement 116 de forme cylindrique circulaire droit.

Tel que cela est notamment visible sur la figure 3, au moins un aimant permanent 120 est agencé le long de la paroi annulaire 112 de la cloche. Chaque aimant permanent 120 présente une forme de pavé avec deux faces principales parmi lesquelles une face avant 122, orientée vers le centre du logement 116 lorsque l'aimant est fixé sur la cloche du rotor, et une face arrière 124 opposée et maintenue en vis-à-vis de la paroi annulaire 112 de la cloche par l'intermédiaire de moyens adhésifs 126 et notamment, dans la description détaillée qui va suivre, de la colle.

Chaque aimant permanent 120 présente en outre quatre faces périphériques reliant chacune l'une à l'autre la face avant et la face arrière de l'aimant permanent, et l'on identifiera parmi ces quatre faces périphériques deux faces latérales 132, agencées parallèlement à l'axe longitudinal AA de la cloche 110, et deux faces transversales 133, agencées en travers de cet axe longitudinal de la cloche. Dans une disposition telle qu'illustrée sur la figure 3, dans laquelle une pluralité d'aimants permanents 120 sont disposés sur la périphérie de la cloche, sur tout le pourtour de la paroi annulaire 112 autour de l'axe longitudinal AA, on comprend que les aimants permanents sont agencés avec leurs faces latérales 132 en regard d'une face latérale d'un aimant permanent voisin.

Selon l'invention, la face arrière 124 d'au moins un aimant permanent présente au moins partiellement un rayon de courbure différent du rayon de courbure de la paroi annulaire 112 contre laquelle l'aimant permanent est destiné à être plaqué, et elle présente plus particulièrement une zone de fixation 134 de l'aimant permanent dont le rayon de courbure est supérieur au rayon de courbure de la paroi annulaire 112 pour former une cavité de réception 136 des moyens adhésifs 126.

De la sorte, la face arrière 124 de cet au moins un aimant permanent est configurée pour former au moins la zone de fixation 134 entourée le cas échéant de zones de contact 128 avec la cloche 110 lorsque l'aimant permanent est fixé sur cette cloche, la cavité de réception de la colle étant agencée entre ces zones de contact.

On va décrire plus en détails, en se référant aux figures 4 et 5, un exemple de réalisation d'un rotor mettant en oeuvre un premier type d'aimant permanent.

La face arrière 124 des aimants permanents est configurée de manière à présenter, dans sa largeur, c'est-à-dire selon la dimension orthoradiale de la cloche lorsque l'aimant permanent est positionné sur la paroi annulaire, trois zones successives d'une face latérale 132 à une autre, et notamment deux zones de contact 128 latérales entourant une zone de fixation 134 centrale.

Chaque zone de contact 128 latérale s'étend entre la zone de fixation 134 et un bord latéral 130 de la face arrière 124 qui correspond à une jonction de la face arrière 124 avec une face latérale 132. Chaque zone de contact 128 délimite une surface dont le rayon de courbure R1 est identique au rayon de courbure R de la paroi annulaire 112. Selon le présent exemple, chaque zone de contact 128 délimite une bande s'étendant sur la toute la longueur de l'aimant permanent 120, c'est-à-dire sur toute la dimension de l'aimant permanent parallèle à l'axe longitudinal AA du rotor. Les zones de contact 128 définissent de préférence des bandes identiques réparties également de part et d'autre de la zone de fixation 134.

La zone de fixation 134 délimite une surface dont le rayon de courbure R2 est bien supérieur à celui de la paroi annulaire 112 de sorte à former un méplat. Tel qu'illustré sur la figure 5, il en résulte que la zone de fixation 134 est distante de ladite paroi et qu'est ainsi formée une cavité 136 entre l'aimant permanent 120 et la cloche 110 lorsque l'aimant permanent 120 est rapporté contre la paroi annulaire 112 de la cloche du rotor. Selon l'invention, la colle 126 utilisée pour la fixation de l'aimant permanent sur la cloche du rotor est déposée principalement dans cette cavité, sans déborder sur l'une ou l'autre des zones de contact 128.

Il résulte de ces caractéristiques, à savoir la présence d'une cavité et le dépôt de colle dans cette cavité, que l'aimant permanent 120 est fixé par collage sur la paroi annulaire 112 de la cloche du rotor avec les zones de contact 128 qui sont en contact direct de la paroi annulaire 112. Le fait que les zones de contact 128 présentent un premier rayon de courbure R1 égal au rayon de courbure R de la paroi annulaire permet d'étendre sur toutes les zones de contact 128 la surface de contact direct entre l'aimant permanent et le rotor.

Selon le présent exemple, la cavité 136 formée par la zone de fixation 134 présente la forme d'une bande centrale qui est centrée au niveau de la face arrière 124 de l'aimant permanent 120, et chacune des zones de contact 128 d'un même aimant permanent, et avantageusement d'un aimant permanent à l'autre, présente des dimensions identiques.

La bande centrale formée par la cavité s'étend de façon continue sur toute la dimension longitudinale de l'aimant permanent, c'est-à-dire d'une face transversale 133 à la face transversale opposée. Il en résulte des ouvertures d'accès à la colle contenue dans la cavité qui sont agencées sur les faces transversales 133 à chaque extrémité longitudinale de l'aimant permanent, qui vont notamment permettre de réaliser le durcissement de la colle tel que décrit ci-après.

À titre d'exemple, la colle ici employée est une colle à base d'acrylate mono-composant dont le durcissement se produit à l'exposition d'un rayonnement UV et/ou UVA.

On va maintenant décrire un exemple de procédé de fixation des aimants permanents sur la cloche du rotor. Dans un premier temps, une quantité de colle 126 est déposée dans la cavité 136 formée par la surface délimitée par la zone de fixation 134 d'un aimant permanent alors que celui-ci est à distance de la cloche. On facilite ainsi l'étape de dépôt de colle en privilégiant l'accessibilité à la face de l'aimant permanent à recouvrir de colle de sorte que l'on peut s'assurer ainsi d'un remplissage optimal de la cavité et d'une utilisation calibrée de la colle pour réaliser ce remplissage. Chaque aimant permanent est rempli, au niveau de sa cavité 136, d'un volume de colle 126 qui lui est propre.

Dans un deuxième temps, les aimants permanents sont amenés au contact de la face interne de la paroi annulaire de la cloche du rotor. Ces aimants permanents peuvent être amenés contre la cloche un par un ou simultanément par l'intermédiaire d'un mandrin expansible. Il convient de noter que les propriétés de viscosité de la colle permettent son maintien dans la cavité 136 le temps que l'aimant permanent soit amené contre la paroi annulaire de la cloche du rotor.

La colle est ensuite durcie pour figer la position de l'aimant permanent sur la cloche du rotor, et notamment par une exposition de la colle 126 à une source de rayonnement UV et/ou UVA afin d'accélérer ce durcissement. Selon l'invention, il est notable que les ouvertures d'accès à la colle formée à chaque extrémité longitudinale de la cavité sur une des faces transversales 133 permettent de faciliter le chauffage de la colle par le rayonnement UV.

On comprend que la source de rayonnement UV est amenée en regard de chacun des aimants permanents 120 via l'extrémité ouverte 118 de la cloche. De la sorte, il pourrait être mis en oeuvre une variante selon laquelle la zone de fixation 134, dont la courbure particulière participe à former la cavité 136 dans laquelle la colle 126 est insérée, ne débouche longitudinalement que sur une seule des faces transversales 133 de l'aimant permanent, étant entendu que dans ce cas, ledit aimant devra être disposé selon une orientation précise pour que cette face transversale spécifique soit tournée vers l'extrémité ouverte 118 de la cloche.

Selon l'invention, on privilégie un dépôt de colle individualisé pour chaque aimant permanent plutôt qu'un dépôt de colle commun à chaque aimant permanent sur tout le pourtour de la paroi annulaire de la cloche. Il en résulte une efficacité dans le dépôt de colle puisqu'aucune colle n'est déposée sur une portion de la cloche non recouverte par un aimant permanent. Selon un autre avantage, chaque zone de fixation 134 délimite avec la paroi annulaire 112 de la cloche une cavité de volume fixe, ce qui permet de contrôler précisément la quantité de colle 126 remplissant chaque cavité. On s'assure ainsi que la quantité de colle remplissant chaque cavité 136 est contrôlée et correspond à la quantité nécessaire pour assurer le maintien de chaque aimant permanent 120 contre la paroi annulaire 112. Selon un autre avantage, la quantité de colle 126 remplissant chaque cavité 136 est calibrée, ce qui permet de s'assurer d'un maintien identique pour chaque aimant permanent 120 contre la cloche 110 tout en optimisant la quantité de colle utilisée.

Il est notable que la zone de fixation 134 est agencée selon la largeur de l'aimant permanent au centre de celui-ci, de manière à être bordée latéralement par les zones de contact. Le chemin de flux magnétique peut ainsi passer de l'aimant permanent à la cloche de part et d'autre de la zone de fixation dans laquelle est concentrée la colle, et l'intensité du flux magnétique n'est ainsi pas diminuée par la présence de colle. Par ailleurs, dans un rotor où une pluralité d'aimants permanents de la sorte sont agencés en série, on facilite la circulation du flux magnétique en diminuant la distance entre le passage du flux d'un aimant permanent à la cloche et le passage du flux de la cloche à l'aimant permanent voisin.

Bien entendu, le volume de la cavité formée entre un aimant permanent 120 et la paroi annulaire 112 de la cloche peut varier en fonction des dimensions de l'aimant permanent, de son poids et de la nature de la colle employée. À titre d'exemple, le volume d'une cavité 136 peut être compris entre 5mm³ et 100 mm³, de préférence entre 10mm³ et 50 mm³. Les dimensions de la cavité 136 peuvent également varier en fonction du rayon de courbure R de la paroi annulaire 112 de la cloche, de la longueur L de l'aimant permanent 120, des largeurs des zones de contact 128 et de la zone de fixation 134 et du rayon de courbure la surface délimitée par la zone de fixation 134 correspondante. Conformément à ce qui a pu être précisé auparavant, on entend par le terme « largeur » la distance séparant les bords latéraux d'une même zone selon la direction définie par la succession de chacune des zones d'un aimant permanent.

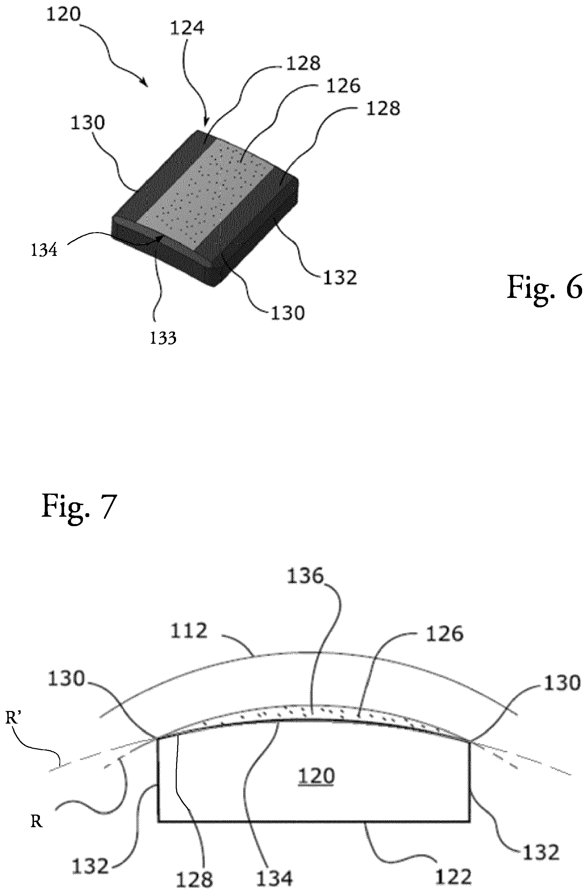

Les figures 6 et 7 illustrent des variantes de réalisation, dans laquelle les largeurs des zones de contact 128 vont en s'amenuisant au détriment de la largeur de la zone de fixation.

L'aimant permanent du deuxième type illustré sur la figure 6 diffère ainsi de l'aimant permanent du premier type précédemment décrit en ce que la quantité de colle pouvant être logée sur la zone de fixation 134 est plus importante, permettant d'assurer une meilleure tenue de l'aimant permanent, et en ce que les zones de passage du flux magnétique de part et d'autre de cette zone de fixation, dans les zones de contact direct avec la cloche du rotor sans colle interposée, sont réduites.

Plus encore, le rotor illustré sur la figure 7, qui correspond à un exemple de réalisation non revendiqué, se distingue en ce que les zones de contact 128 avec la cloche du rotor sont limitées aux seuls bords latéraux 130, formant ainsi des arêtes de contact avec la cloche. En d'autres termes, la face arrière 124 de l'aimant permanent 120 est de surface convexe régulière avec un rayon de courbure identique entre les deux bords 130 définis par les faces latérales 132 opposés. Dans le contexte de l'invention, le rayon de courbure R' de la face arrière 124 est supérieur au rayon de courbure R de la paroi annulaire 112 de la cloche 110, de sorte à former là aussi une cavité 136 dans laquelle de la colle 126 est présente afin d'assurer le maintien de l'aimant permanent 120 contre la cloche 110. Dans ce cas, on comprend que la zone de fixation 134 participant à former la cavité s'étend sur toute la face arrière 124.

À titre d'exemple, le rapport entre le rayon de courbure R' de la face arrière 124 et le rayon de courbure R de la paroi annulaire 112 de la cloche 110 peut être supérieur à 1,1 et de préférence inférieur à 4,2. Cette dernière variante de réalisation permet, tout en préservant un contact direct entre la face arrière 124 de l'aimant permanent 120 et la cloche 110 au niveau des bords 130 formés à la jonction de la face arrière 124 et des faces latérales 132, de diminuer la profondeur maximale de la cavité 136 et donc l'écart maximal entre la face arrière 124 et la paroi annulaire 112, ce qui a pour effet de minimiser les nuisances de la colle sur la propagation d'un flux magnétique généré par l'aimant permanent 120 vers la cloche 110.

Conformément à ce qui précède, des zones de contact latérales entre l'aimant permanent et la cloche du rotor sont ménagées par les bords latéraux et la colle 126, lorsqu'elle est disposée dans la cavité 136 et que l'aimant permanent 120 est plaqué contre la paroi annulaire 112, est accessible uniquement par une ou les faces transversales 133.

La description qui précède vise à expliquer comment l'invention permet d'atteindre les objectifs qu'elle s'est fixés et notamment de proposer un moteur électrique, notamment pour un dispositif de pulsion d'air, qui optimise le cheminement des flux magnétiques et qui rationalise l'utilisation de colle pour la fixation des aimants permanents sur la cloche du rotor, par l'élaboration d'une zone de réception de colle dans chacun des aimants permanents et par le dépôt de colle spécifique à chaque aimant permanent en lieu et place d'une opération de dépôt de colle sur tout le pourtour des aimants permanents. Les différentes variantes de réalisation de l'invention, parmi lesquelles celles décrites à titre d'exemple ci-dessus, mettent en oeuvre une zone de dépôt de colle spécifique à chaque aimant permanent et ménagée au centre de celui-ci de sorte que l'on ménage des zones de contact sans colle interposée pour la bonne transmission du flux magnétique entre les aimants et la cloche. Il est notable que, selon l'invention, ces zones de contact sont latérales et donc au plus près de l'aimant permanent voisin. On diminue ainsi, pour un champ magnétique créé par l'interaction du stator bobiné et d'un des aimants permanents, la dimension des lignes de champ rebouclant par l'intermédiaire de l'aimant permanent voisin.

Toutefois, l'invention n'est pas limitée aux seuls rotors et dispositifs de pulsion d'air conformes aux variantes de réalisation explicitement décrites en regard des figures, étant entendu que des modifications pourraient être mises en place sans sortir du contexte de l' invention telle que définie par les revendication annexées, et notamment dans le dimensionnement des zones définies par le ou les rayons de courbure ménagées sur la face arrière de l'aimant en regard de la cloche du rotor. De même, on ne sortira pas du cadre de l'invention en formant une cavité de réception desdits moyens adhésifs avec un chanfrein présentant sensiblement une forme de droite dont le rayon de courbure est très grand par rapport à celui de la cloche.

## Revendications

1. Rotor (100) à aimants permanents pour moteur électrique comprenant une clocher formée à partir d'un matériau magnétique et (110) comportant une paroi annulaire (112) et au moins un aimant permanent (120) fixé sur la paroi annulaire interne par l'intermédiaire de moyens adhésifs (126) disposés entre la paroi annulaire (112) et une face arrière (124) de l'aimant permanent (120), où la face arrière (124) de l'aimant permanent (120) présente une zone de fixation (134) définie par un rayon de courbure (R', R2) qui est supérieur au rayon de courbure (R) de la paroi annulaire (112), ladite zone de fixation participant ainsi à former une cavité de réception desdits moyens adhésifs (126), la face arrière (124) étant conformée de sorte que la zone de fixation (134) est bordée latéralement par deux zones de contact (128) avec la paroi annulaire (112), lesdits moyens adhésifs (126) étant contenus dans la zone de fixation (134), où la zone de fixation forme un méplat, **caractérisé en ce que** les zones de contact délimitent des surfaces dont le rayon de courbure est identique à celui de la paroi annulaire.

2. Rotor (100) selon la revendication précédente, **caractérisé en ce que** le rapport entre le rayon de courbure (R', R2) de la surface délimitée par la zone de fixation (134) et le rayon de courbure (R) de la paroi annulaire (112) est supérieur à 1,1, de préférence compris entre 1,1 et 4,2.

3. Rotor (100) selon l'une des revendications précédentes, **caractérisé en ce que** la zone de fixation (134) formant réception desdits moyens adhésifs s'étend partiellement sur la dimension de la face arrière (124) de l'au moins un aimant permanent définie d'un bord latéral (130) à l'autre.

4. Rotor (100) selon la revendication précédente, **caractérisé en ce que** chaque zone de contact (128) est délimitée par une surface dont le rayon de courbure est inférieur au rayon de courbure de la surface délimitant la zone de fixation (134).

5. Rotor (100) selon l'une des revendications 3 à 4, **caractérisé en ce que** la surface délimitant la zone de fixation (134) des moyens adhésifs occupe entre 20% et 60%, de préférence entre 25% et 40% de la surface de la face arrière (124) de l'au moins un aimant permanent (120).

6. Rotor (100) selon l'une des revendications 1 ou 2, **caractérisé en ce que** la zone de fixation (134) formant réception desdits moyens adhésifs s'étend sur toute la dimension de la face arrière (124) de l'au moins un aimant permanent définie d'un bord latéral (130) à l'autre.

7. Rotor (100) selon la revendication précédente, **caractérisé en ce que** l'au moins un aimant permanent (120) est au contact de la paroi annulaire (112) par l'intermédiaire des bords latéraux (130) de cet aimant, de part et d'autre de la zone de fixation (134).

8. Rotor (100) selon l'une des revendications précédentes, **caractérisé en ce que** les moyens adhésifs (126) consistent en une colle.

9. Rotor (100) selon la revendication précédente, **caractérisé en ce que** la colle est une colle à base d'acrylate mono-composant.

10. Rotor (100) selon l'une des revendications précédentes, **caractérisé en ce que** la zone de fixation (134) pour la réception des moyens adhésifs (126) s'étend le long de la face arrière de l'au moins un aimant permanent, de manière à déboucher au niveau d'une face transversale (133) de cet aimant permanent (120).

11. Rotor (100) selon l'une des revendications précédentes, **caractérisé en ce qu'**il comporte une pluralité d'aimants permanents (120) agencés en série sur le pourtour de la paroi annulaire (112), chaque aimant permanent comportant une zone de fixation (134) formant une cavité de réception de moyens adhésifs pour sa fixation sur la paroi annulaire, cette paroi annulaire étant dépourvue de moyens adhésifs entre deux aimants permanents successifs.

12. Rotor (100) selon la revendication précédente, **caractérisé en ce que** chaque aimant permanent (120) comporte des zones de contact (128) avec la paroi annulaire (112) agencées latéralement, c'est-à-dire au plus près d'un aimant permanent voisin.

13. Rotor (100) selon l'une des revendications précédentes, **caractérisé en ce qu'**au moins un aimant permanent (120) comporte une face avant (122) qui présente une courbe parallèle à celle de la paroi annulaire de la cloche.

14. Dispositif de pulsion d'air (1) pour véhicule automobile comprenant une roue de ventilation (4) entraînée en rotation par un moteur électrique (2) comportant un stator (12) porteur d'un bobinage alimenté électriquement et un rotor externe (100), conforme à l'une des revendications précédentes.

## Patentansprüche

1. Rotor (100) mit Dauermagneten für einen Elektromotor, umfassend eine Glocke (110), die aus einem magnetischen Material gebildet ist und eine ringförmige Wand (112) und mindestens einen Dauermagneten (120) aufweist, der mit Hilfe von zwischen der ringförmigen Wand (112) und einer Rückseite (124) des Dauermagneten (120) angeordneten Haftmitteln (126) an der Innenseite der ringförmigen Wand befestigt ist,
wobei die Rückseite (124) des Dauermagneten (120) einen Befestigungsbereich (134) aufweist, der durch einen Krümmungsradius (R', R2) definiert ist, der größer als der Krümmungsradius (R) der ringförmigen Wand (112) ist, wobei der Befestigungsbereich somit dazu beiträgt, einen Hohlraum zur Aufnahme der Haftmittel (126) zu bilden, wobei die Rückseite (124) so geformt ist, dass der Befestigungsbereich (134) seitlich durch zwei Kontaktbereiche (128) mit der ringförmigen Wand (112) begrenzt ist, wobei die Haftmittel (126) im Befestigungsbereich (134) enthalten sind,
wobei der Befestigungsbereich eine Abflachung bildet,
**dadurch gekennzeichnet, dass** die Kontaktbereiche Flächen begrenzen, deren Krümmungsradius identisch mit dem der ringförmigen Wand ist.

2. Rotor (100) nach dem vorangehenden Anspruch, **dadurch gekennzeichnet, dass** das Verhältnis zwischen dem Krümmungsradius (R', R2) der durch den Befestigungsbereich (134) begrenzten Fläche und dem Krümmungsradius (R) der ringförmigen Wand (112) größer als 1,1 ist und vorzugsweise zwischen 1,1 und 4,2 liegt.

3. Rotor (100) nach einem der vorangehenden Ansprüche, **dadurch gekennzeichnet, dass** sich der Befestigungsbereich (134), der die Aufnahme der Haftmittel bildet, teilweise über die Abmessung der Rückseite (124) des mindestens einen Dauermagneten, die von einer Seitenkante (130) zur anderen definiert ist, erstreckt.

4. Rotor (100) nach dem vorangehenden Anspruch, **dadurch gekennzeichnet, dass** jeder Kontaktbereich (128) durch eine Fläche begrenzt ist, deren Krümmungsradius kleiner als der Krümmungsradius der den Befestigungsbereich (134) begrenzenden Fläche ist.

5. Rotor (100) nach einem der Ansprüche 3 bis 4, **dadurch gekennzeichnet, dass** die den Befestigungsbereich (134) der Haftmittel begrenzende Fläche zwischen 20 % und 60 %, vorzugsweise zwischen 25 % und 40 %, der Fläche der Rückseite (124) des mindestens einen Dauermagneten (120) einnimmt.

6. Rotor (100) nach einem der Ansprüche 1 oder 2, **dadurch gekennzeichnet, dass** sich der Befestigungsbereich (134), der die Aufnahme der Haftmittel bildet, über die gesamte Abmessung der Rückseite (124) des mindestens einen Dauermagneten, die von einer Seitenkante (130) zur anderen definiert ist, erstreckt.

7. Rotor (100) nach dem vorangehenden Anspruch, **dadurch gekennzeichnet, dass** der mindestens eine Dauermagnet (120) mit der ringförmigen Wand (112) über die Seitenkanten (130) dieses Magneten auf beiden Seiten des Befestigungsbereichs (134) in Kontakt steht.

8. Rotor (100) nach einem der vorangehenden Ansprüche, **dadurch gekennzeichnet, dass** die Haftmittel (126) aus einem Klebstoff bestehen.

9. Rotor (100) nach dem vorangehenden Anspruch, **dadurch gekennzeichnet, dass** der Klebstoff ein Klebstoff auf der Basis von Einkomponentenacrylat ist.

10. Rotor (100) nach einem der vorangehenden Ansprüche, **dadurch gekennzeichnet, dass** sich der Befestigungsbereich (134) zur Aufnahme der Haftmittel (126) entlang der Rückseite des mindestens einen Dauermagneten erstreckt, so dass er an einer Querseite (133) dieses Dauermagneten (120) mündet.

11. Rotor (100) nach einem der vorangehenden Ansprüche, **dadurch gekennzeichnet, dass** er mehrere Dauermagneten (120) aufweist, die in Reihe am Umfang der ringförmigen Wand (112) angeordnet sind, wobei jeder Dauermagnet einen Befestigungsbereich (134) aufweist, der einen Hohlraum zur Aufnahme von Haftmitteln für seine Befestigung an der ringförmigen Wand bildet, wobei diese ringförmige Wand zwischen zwei aufeinanderfolgenden Dauermagneten keine Haftmittel aufweist.

12. Rotor (100) nach dem vorangehenden Anspruch, **dadurch gekennzeichnet, dass** jeder Dauermagnet (120) Kontaktbereiche (128) mit der ringförmigen Wand (112) aufweist, die seitlich, d. h. so nah wie möglich an einem benachbarten Dauermagneten, angeordnet sind.

13. Rotor (100) nach einem der vorangehenden Ansprüche, **dadurch gekennzeichnet, dass** mindestens ein Dauermagnet (120) eine Vorderseite (122) umfasst, die eine Krümmung aufweist, die parallel zu der der ringförmigen Wand der Glocke ist.

14. Luftbewegungsvorrichtung (1) für ein Kraftfahrzeug, umfassend ein Lüftungsrad (4), das durch einen Elektromotor (2) in Drehung versetzt wird, der einen Stator (12), der eine elektrisch versorgte Wicklung trägt, und einen externen Rotor (100) nach einem der vorangehenden Ansprüche aufweist.

## Claims

1. Permanent magnet rotor (100) for an electric motor comprising a bell housing (110) made from a magnetic material and comprising an annular wall (112) and at least one permanent magnet (120) fixed to the internal annular wall by adhesive means (126) sited between the annular wall (112) and a rear face (124) of the permanent magnet (120), wherein the rear face (124) of the permanent magnet (120) has a fixing zone (134) defined by a radius of curvature (R', R2) which is greater than the radius of curvature (R) of the annular wall (112), said fixing zone thus contributing to forming a cavity for accepting said adhesive means (126), the rear face (124) being configured in such a way that the fixing zone (134) is bordered laterally by two contact zones (128) for contact with the annular wall (112), said adhesive means (126) being contained in the fixing zone (134), and wherein the fixing zone forms a flat, **characterized in that** the contact zones delimit surfaces of which the radius of curvature is identical to that of the annular wall.

2. Rotor (100) according to the preceding claim, **characterized in that** the ratio between the radius of curvature (R', R2) of the surface delimited by the fixing zone (134) and the radius of curvature (R) of the annular wall (112) is greater than 1.1, preferably comprised between 1.1 and 4.2.

3. Rotor (100) according to one of the preceding claims, **characterized in that** the fixing zone (134) that accepts said adhesive means extends partially over the dimension of the rear face (124) of the at least one permanent magnet, which dimension is defined from one lateral edge (130) to the other.

4. Rotor (100) according to the preceding claim, **characterized in that** each contact zone (128) is delimited by a surface of which the radius of curvature is less than the radius of curvature of the surface delimiting the fixing zone (134).

5. Rotor (100) according to one of Claims 3 to 4, **characterized in that** the surface delimiting the fixing zone (134) for the adhesive means occupies between 20% and 60%, preferably between 25% and 40%, of the surface of the rear face (124) of the at least one permanent magnet (120).

6. Rotor (100) according to one of Claims 1 and 2, **characterized in that** the fixing zone (134) that accepts said adhesive means extends over the entire dimension of the rear face (124) of the at least one permanent magnet, which dimension is defined from one lateral edge (130) to the other.

7. Rotor (100) according to the preceding claim, **characterized in that** the at least one permanent magnet (120) is in contact with the annular wall (112) via the lateral edges (130) of this magnet, on each side of the fixing zone (134).

8. Rotor (100) according to one of the preceding claims, **characterized in that** the adhesive means (126) consist of a glue.

9. Rotor (100) according to the preceding claim, **characterized in that** the glue is a single-component acrylate-based glue.

10. Rotor (100) according to one of the preceding claims, **characterized in that** the fixing zone (134) accepting the adhesive means (126) extends along the rear face of the at least one permanent magnet in such a way as to emerge onto a transverse face (133) of this permanent magnet (120).

11. Rotor (100) according to one of the preceding claims, **characterized in that** it comprises a plurality of permanent magnets (120) arranged in series on the periphery of the annular wall (112), each permanent magnet comprising a fixing zone (134) forming a cavity to accept adhesive means for fixing it to the annular wall, this annular wall being devoid of adhesive means between two successive permanent magnets.

12. Rotor (100) according to the preceding claim, **characterized in that** each permanent magnet (120) comprises contact zones (128) for contact with the annular wall (112), these being arranged laterally, namely as close as possible to a neighbouring permanent magnet.

13. Rotor (100) according to one of the preceding claims, **characterized in that** at least one permanent magnet (120) comprises a front face (122) which has a curve parallel to that of the annular wall of the bell housing.

14. Air blower device (1) for a motor vehicle, comprising a blower wheel (4) driven in rotation by an electric motor (2) comprising a stator (12) bearing an electrically powered winding and an external rotor (100), according to one of the preceding claims.
